# EUROPÄISCHE PATENTSCHRIFT

(11) **EP 0 499 064 B1**
(45) Veröffentlichungstag und Bekanntmachung des Hinweises auf die Patenterteilung: **08.06.1994**
(21) Anmeldenummer: 92101055.9
(22) Anmeldetag: 23.01.1992
(51) Int. Cl.: A01F 15/10, A01D 90/04

(54) **Maschine zum Aufnehmen und Pressen von landwirtschaftlichem Erntegut**
Machine for picking up and pressing agrigultural produce
Machine pour ramasser et presser des produits agricoles récoltés

(30) Priorität: 15.02.1991 DE 4104643
(43) Veröffentlichungstag der Anmeldung: 19.08.1992
(73) Patentinhaber: NEW HOLLAND BELGIUM N.V., B-8210 Zedelgem (BE)
(72) Erfinder: Krone, Bernard, W-4441 Spelle (DE); Ahler, Wilhelm, W-4424 Stadtlohn (DE)
(74) Vertreter: Feldkamp, Rainer, Dipl.-Ing.

(56) Entgegenhaltungen:
- EP-A- 0 089 151
- DE-A- 3 445 050
- DE-A- 3 816 204
- NL-A- 7 904 652

## Beschreibung

Die Erfindung bezieht sich auf eine Maschine zum Aufnehmen und Pressen von landwirtschaftlichem Erntegut wie beispielsweise Heu, Stroh oder Gras zu rollenförmigen Ballen in einer Ausbildung gemäß dem Oberbegriff des Anspruchs 1.

Maschinen der vorgenannten Art mit einem hinsichtlich der zu formenden Ballengröße variablen Ballenformraum sind in unterschiedlicher Gestaltung bekannt. Mit diesen Maschinen sollen Ballen unterschiedlicher Größe jedoch möglichst vergleichbarer Pressung zu formen sein, um die Maschinen für unterschiedliche Anwendungs- und Bedarfszwecke nutzen zu können. Bekannte Maschinen dieser Art haben einen oder mehrere lageveränderlich geführte Ballenförderer(n) in Gestalt von z.B.über schwenkbeweglich gehalterte Umlenkrollen geführte Ballenfördererriemen oder dergleichen Förderelemente. Während des Ballenformvorganges wirken diese Ballenförderer mit einem der Erntegutaufnahmevorrichtung in Förderrichtung nachgeordneten Erntegutförderer zusammen, so daß während des Ballenformvorganges der bzw. die Ballenförderer und der Erntegutförderer den zu formenden Ballen beaufschlagen. Aus der DE-OS 37 34 186 ist beispielsweise eine Maschine dieser Art bekannt, bei der zwei Ballenförderer in Gestalt von Endlosriemen vorgesehen sind, die während des Ballenformvorganges mit einem im Bodenbereich der Maschine angeordneten Erntegutförderer zusammenwirken. Dieser Erntegutförderer hat gleichfalls mehrere nebeneinander angeordnete endlose Riemen, die in gemeinsamer Umlaufrichtung angetrieben werden.

Gegenüber derartigen Maschinen sind herkömmliche Festkammermaschinen bekannt, bei denen der Einlaßöffnung der Maschine eine Schneidvorrichtung zum Zerkleinern des zu pressenden Erntegutes zugeordnet ist. Dies dient insbesondere dazu, ein langfaseriges Erntegut wie Stroh geschnitten zu einem Ballen zu formen, der zur Fütterung leichter aufzulösen ist. In der DE-OS 38 16 204 ist eine derartige Maschine beschrieben, bei der das Schneidwerk mehrere in einen Förderspalt bzw. -kanal der Maschine ragende, schwenkbar gelagerte Schneidmesser hat. Die Schneidwerkzeuge sind dabei derart verschwenkbar, daß sie in ihrer Schneidausgangsstellung keine Schneidwirkung auf das Halmgut ausüben. Damit soll sich ein Ballen formen lassen, dessen Kernbereich aus ungeschnittenem Halmgut besteht, der darüber hinaus jedoch geschnittenes, leichter auflösbares Halmgut aufweist. Diese Maschine ist sehr bauaufwendig gestaltet, da besondere Förder- und Schneidvorrichtungen mit besonderen Antrieben und Steuerelementen erforderlich sind. Dies wirkt sich nachteilig auf die Gestehungskosten aus.

Es ist Aufgabe der vorliegenden Erfindung, in baulich einfacher Weise eine Maschine der eingangs genannten Art zu schaffen, mit der Ballen mit unterschiedlichen Ballengrößen derart zu formen sind, daß sie Bereiche aus geschnittenem und ungeschnittenem Erntegut aufweisen.

Zur Lösung dieser Aufgabe zeichnet sich die Maschine der eingangs genannten Art durch die im kennzeichnenden Teil des Anspruchs 1 angegebenen Merkmale aus. Hinsichtlich weiterer wesentlicher Ausgestaltungen wird auf die Ansprüche 2 bis 21 verwiesen.

Mit den dem Erntegutförderer direkt zugeordneten Schneidwerkzeugen läßt sich das dem Ballenformvorgang zu unterziehende Erntegut in baulich einfacher Weise zerkleinern, ohne daß es besonderer Schneideinrichtungen mit zusätzlichen Förderelementen, Antrieben, Steuerelementen, Erntegutführungskanälen bzw. -zonen und dgl. bedarf. Da der schon vorhandene Erntegutförderer den zu formenden Ballen gemeinsam mit dem oder den Ballenförderer(n) während des Ballenformvorganges beaufschlagt, sind z. B. bei Erreichen einer bestimmten Ballenformgröße bzw. eines bestimmten Ballendurchmessers die Schneidwerkzeuge aus ihrer Ausgangsstellung, in der sie sich innerhalb des Erntegutförderers bzw. innerhalb des Förderwirkbereiches seiner Förderwerkzeuge befinden, in ihre Schneidendstellung zu überführen, so daß sie in den zu formenden Ballen einschneiden können. Hierbei können die Schneidwerkzeuge von ihren Abmessungen bzw. von ihrer Formgebung in vorteilhafter Weise derart ausgebildet sein, daß sie je nach Dicke der dem Ballenformvorgang zuzuführenden Erntegutmatte jeweils die neu einzuformende Matte durchdringen bzw. schneiden. Durch den bzw. die lageveränderlich geführten Ballenförderer wird der zu formende Ballen während des Ballenformvorganges mit einer zusätzlich zur Gewichtskraft des Ballens wirkenden, zum Erntegutförderer und damit auch zu den Schneidwerkzeugen ausgerichteten Kraft beaufschlagt, die als Schnittkraft auf den Ballen genutzt werden kann. Die Schneidwerkzeuge können bei unterschiedlich gestalteten Erntegutförderern vorgesehen sein. Beispielsweise kann der Erntegutförderer aus mehreren nebeneinander angeordneten Endlosriemen, Ketten oder dgl. bestehen aber auch, was eine bevorzugte Ausführungsvariante der Erfindung vorsieht, als Förderwalze ausgebildet sein. Gleichfalls ist es möglich, daß die Maschine nur einen Ballenförderer hat, oder beispielsweise einen ersten, dem vorderen Ballenformraum einer Wickelkammer zugeordneten Ballenförderer und einen zweiten, den hinteren Ballenformraum zugeordneten Ballenförderer.

In baulich besonders einfacher Ausbildung ist bei einem als Förderwalze ausgebildeten Erntegutförderer zwischen Förderwalzensegmenten jeweils ein ringförmiger Aufnahmeraum für Werkzeughalter der Schneidwerkzeuge vorzusehen, in dem sich die Schneidwerkzeuge in ihrer Schneidausgangslage befinden. Die Schneidwerkzeuge können gleichfalls, was eine bevorzugte Weiterbildung der Erfindung vorsieht, ohne das Erfordernis zusätzlicher besonderer Steuerungsvorrichtungen über die Lageveränderung einer Umlenk-, Ausgleichs- oder Spannrolle oder ganz allgemein eines Spannelementes eines vorgesehenen Ballenförderers aktiviert werden, so daß durch die bei der Maschine vorgesehenen Schneidwerkzeuge auch die baulichen Maschinenabmessungen insgesamt nicht vergrößert sind.

Zur weiteren Erläuterung der Erfindung wird auf die Zeichnung und die nachfolgende Beschreibung verwiesen. In der Zeichung ist die Erfindung anhand eines Ausführungsbeispiels einer Maschine erläutert, die in besonders vorteilhafter Weise mit jeweils unabhängig voneinander auf eine unterschiedliche Spannkraft einstellbare Spannförderer aufweist und Gegenstand der DE-Patentanmeldung P 40 12 755.9 ist, auf die ergänzend zur nachfolgenden Beschreibung verwiesen wird. In der Zeichnung zeigen:
- Fig. 1: eine schematische Seitenansicht eines Ausführungsbeispiels nach der Erfindung in der Ausgangsstellung der Ballenförderer zu Beginn eines Ballenformvorganges;
- Fig. 2: vergrößert den in Fig. 1 mit "Z" dargestellten Ausschnitt des Ausführungsbeispiels in der Schneidausgangslage der Schneidwerkzeuge;
- Fig. 3: eine zu Fig. 2 analoge Darstellung mit in die Schneidendstellung überführten Schneidmessern;
- Fig. 4: eine Schnittdarstellung gemäß der Schnittlinie IV-IV in Fig. 3;
- Fig. 5: ausschnittsweise eine Seitenansicht eines Ausführungsbeispiels eines Messerhalters mit eingebrachtem Schneidwerkzeug;
- Fig. 6: eine zu Fig. 5 analoge Darstellung mit demontiertem Schneidwerkzeug;
- Fig. 7: eine Schnittdarstellung gemäß der Schnittlinie VII-VII in Fig. 6;
- Fig. 8: ausschnittsweise eine Seitenansicht eines alternativen Ausführungsbeispiels eines Messerhalters sowie eines Schneidwerkzeuges,
- Fig. 9: vergrößert den in Fig. 1 mit "X" gekennzeichneten Ausschnitt des veranschaulichten Ausführungsbeispiels im Bereich der Spann- und Ausgleichsrolle und der Stellhebel zur Aktivierung des Schaltventils der Schalteinrichtung beim Einschaltvorgang der Schneidwerkzeuge, wobei die Einschaltstellung strichliniert dargestellt ist;
- Fig. 10: eine zu Fig. 9 analoge Darstellung in einer Betriebsstellung der Teile beim Öffnen der Wickelkammer, und
- Fig. 11: Anschluß des hydraulischen Schaltventils an die Maschinenhydraulik mit Hydraulikteilen zum Aufklappen der Wickelkammer sowie zur Betätigung einer Umhüllungsvorrichtung.

Die in der Zeichnung veranschaulichte Maschine zum Aufnehmen und Pressen von landwirtschaftlichem Erntegut zu rollenförmigen Ballen hat ein allgemein mit 1 beziffertes Fahrgestell mit Rädern 2, welches über eine Zugdeichsel 3 an einen Schlepper anzuhängen ist. Den Rädern 2 ist in Arbeitsrichtung der Maschine eine allgemein mit 4 bezifferte Aufnahmevorrichtung mit Pick-up 5 sowie Querschneckenförderern 5.1 üblicher Bauart und dergleichen vorgeordnet. Die Maschine ist über eine nicht naher dargestellte Gelenkwellenverbindung antriebsmäßig mit dem Schlepper zu koppeln, über die die zu bewegenden Teile wie Pick-up 5 eine allgemein mit 6 bezifferte Umhüllungsvorrichtung und dergleichen sowie die noch zu beschreibenden Ballenförderer in Antriebsbewegung zu versetzen sind.

Auf dem Fahrgestell 1 ist eine allgemein mit 7 bezifferte Wickelkammer angeordnet, die ein Vorderkammergehäuse 8 die zur Umgrenzung eines vorderen Ballenformraumes sowie eines Hinterkammergehäuses 10 zur Umgrenzung eines hinteren Ballenformraumes umfaßt. Nach Lösen einer Verriegelungsverbindung 12 ist das Hinterkammergehäuse 10 nach Formung eines Ballens mit dem gewünschten Durchmesser um die Schwenkachse 13 in ihre Offen- bzw. Aufklappstellung mittels eines Hydraulikzylinders 14 zu überführen und mithin der fertige Ballen auszuwerfen.

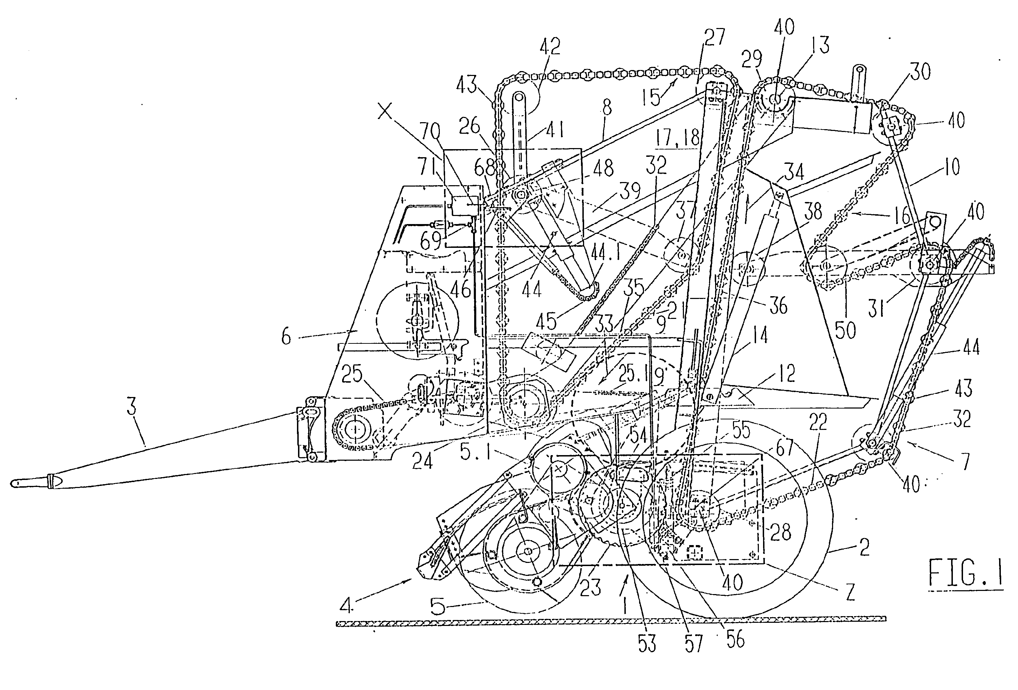

Bei dem veranschaulichten Ausführungsbeispiel ist dem vorderen Ballenformraum 9 ist ein erster Ballenförderer 15 und dem hinteren Ballenformraum ein zweiter Ballenförderer 16zugeordnet. Der erste und der zweite Ballenförderer werden durch an den Innenbereich der Gehäuseseitenwandteile geführte Wickelketten 21,22 sowie daran gehalterte rohrförmige Querstäben gebildet. Der erste Ballenförderer 15 ist über insgesamt drei ortsfest drehbeweglich an den Gehäuseseitenwandteilen des Vorderkammergehäuses 8 abgestützte Umlenkrollen 24,26,27 geführt. Dabei ist die in Fig. 1 untere äußerste Umlenkrolle 24 über einen Kettentrieb 25 anzutreiben. Über einen weiteren Kettentrieb 25.1 ist die im unteren Ballenformraum angeordnete, den unteren Erntegutförderer 23 bildende Förderwalze anzutreiben, welche im nachfolgenden noch im einzelnen näher beschrieben wird.

Oberhalb der Umlenkrolle 24 ist die zweite ortsfeste Umlenkrolle 26 angeordnet. Am oberen, dem Hinterkammergehäuse 10 zugewandten Vordergehäuseende ist die obere Umlenkrolle 27 vorgesehen, die bei dem veranschaulichten Ausführungsbeispiel mithin die Abmessungen der Maschine nach oben hin im wesentlichen festlegt. Der zweite Ballenförderer 16 ist über eine untere ortsfeste Umlenkrolle 28, eine obere im wesentlichen in gleicher Höhe neben der oberen Umlenkrolle 27 des ersten Bandförderers 15 angeordnete Umlenkantriebsrolle 29, die im übrigen eine mit der Schwenkachse 13 übereinstimmende Drehachse hat, und im rückwärtigen Bereich der Maschine über weitere ortsfeste auf Achskörpern 40 gelagerte Umlenkrollen 30,31 und 32 geführt. Die obere Umlenkantriebsrolle 29 des zweiten Ballenförderers 16 ist über einen Kettentrieb 32 mit der unteren, angetriebenen Umlenk-bzw. Umlenkantriebsrolle 24 des ersten Ballenförderers antriebsmäßig gekoppelt, so daß nach Inbetriebsetzen der Förderer 15 und 16 diese in gegenläufige Antriebsbewegungen in Richtung der Pfeile 33 und 34 zu versetzen sind. An den im Betrieb einander zugewandten inneren Trums 35 und 36 sind jeweils innere Spannführungsrollen 37 und 38 anlegbar, die über einen Verbindungsachskörper miteinander verbunden sind, wie dies näher in der DE-Patentanmeldung P 40 12 755.9 beschrieben ist. Die Spannführungsrolle 37 ist drehbeweglich an einen Schwenkhebelarm 39 gehaltert, der seinerseits an dem Achskörper 48 der Umlenkrolle 26 abgestützt ist. An diesem Achskörper 48 ist ein weiterer Hebel 41 schwenkbeweglich abgestützt, der an seinem anderen Ende eine Spann- und Ausgleichsrolle 42 drehbeweglich haltert, die am äußeren Trum 43 des ersten Ballenförderers 15 angreift. An dem Achskörper 48 ist darüber hinaus ein Spannkrafterzeuger in Gestalt eines Hydraulikzylinders 44 abgestützt. Über das bogenförmige Stirnende 44.1 des Hubauslegers des Hydraulikszylinders 44 ist abrollend eine Kette 45 geführt, die endseitig einerseits an einem Verbindungsarm 46 und Schwenkhebelarm 39 angreift. Die allgemein mit 6 bezifferte Netzwickel bzw. Umhüllungsvorrichtung ist vom grundsätzlichen Aufbau her so gestaltet wie in der DE-Patentanmeldung P 40 12 741.9 beschrieben, auf die gleichfalls ausdrücklich verwiesen wird.

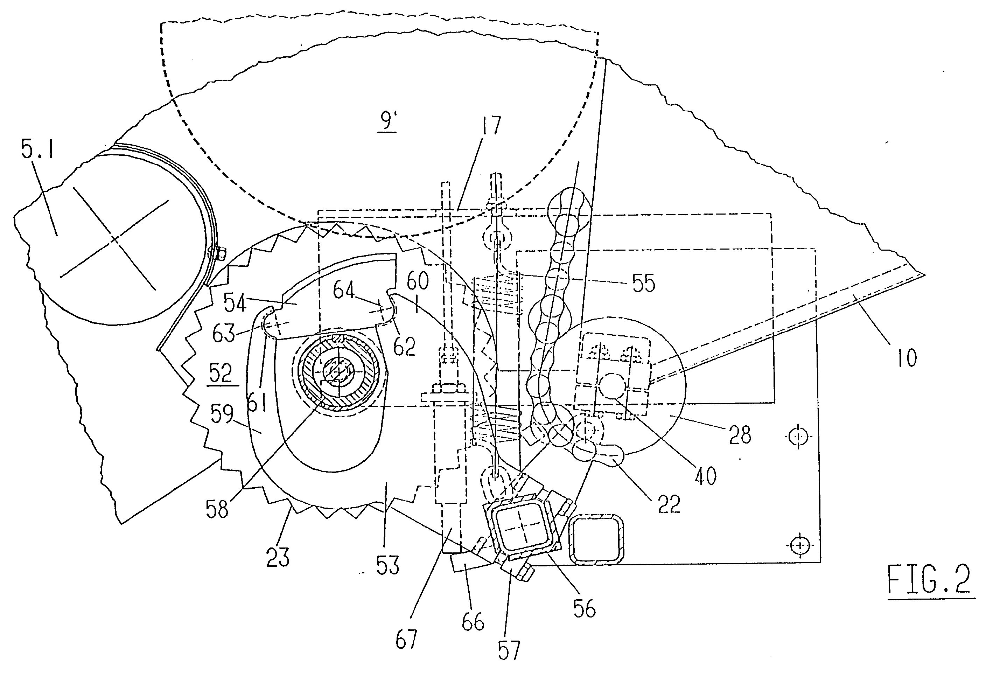

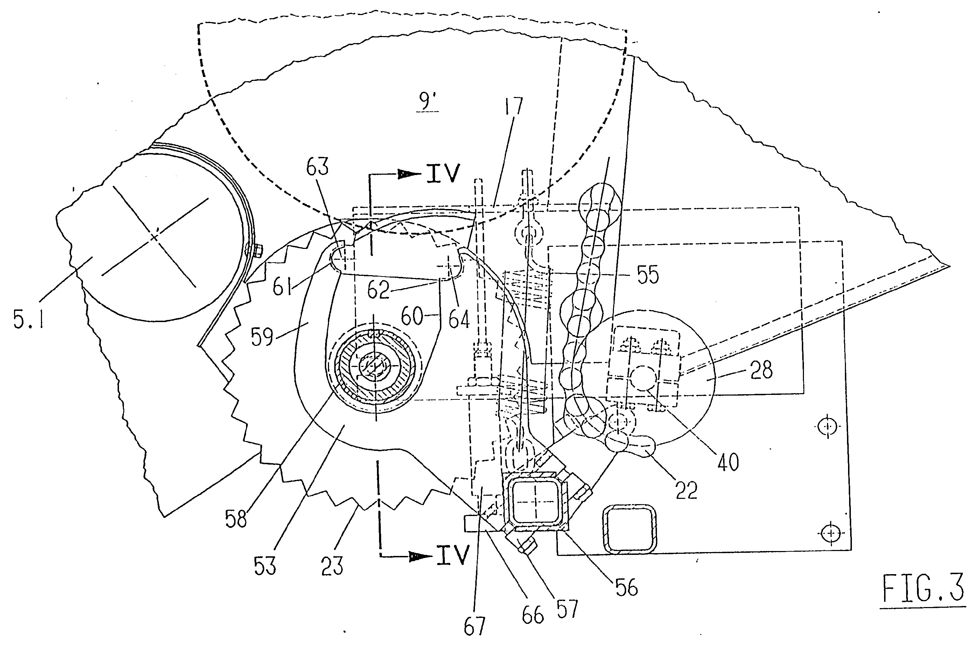

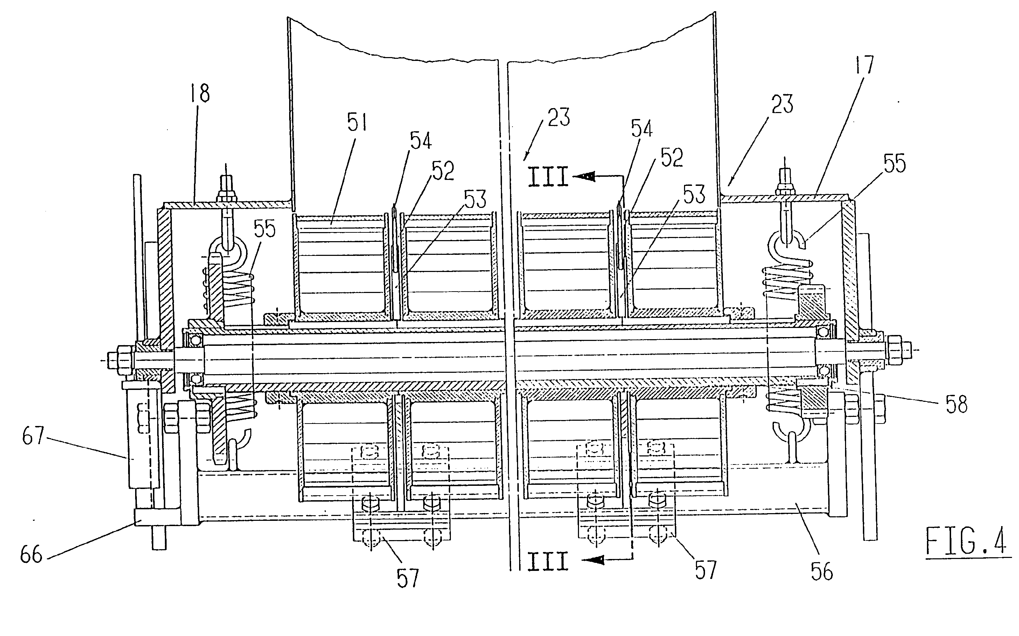

Der Erntegutförderer 23 ist in dem veranschaulichten Ausführungsbeispiels der Förderwalze mit Förderwalzensegmenten 51 ausgebildet. Zudem hat der Erntegutförderer 23 mit Abstand nebeneinander vorgesehene, in wesentlichen ringförmige Aufnahmeräume 52 (Fig. 4) zur Anordnung von Werkzeughaltern 53 von Schneidwerkzeugen 54. Wie in Fig. 2 dargestellt, sind die Schneidwerkzeuge 54 in ihrer Schneidausgangslage derart in den Aufnahmeräumen 52 des Erntegutförderers 23 angeordnet, daß sie sich über dessen Mantelfläche nicht hinauserstrecken und mithin keine Schneidwirkung entfalten können. Dabei können sie auch derart gehaltert sein, daß ihr Verschwenkweg veränderbar ist mit der Konsequenz, was sie im Hinblick auf unterschiedliche eindringtiefe an Ballen unterschiedliche Schneidendstellungen einnehmen können. In der Darstellung nach Fig. 3 sind die Schneidwerkzeuge in ihre Schneidendstellung überführt und ragen mit sich in Förderrichtung und zum zu formenden Ballen hin erweiternden, bogenförmigen Schneidklingen über die Mantelfläche des Erntegutförderers 23 hinaus, so daß sie mithin mit ziehenden Schnitt das zu dem Ballen 9' zu formende Erntegut mattenweise sicher schneiden, da der Ballen zudem noch durch die umlaufenden Ballenförderer 15,16 auf bzw. gegen den Erntegutförderer 23 und die Schneidwerkzeuge gedrückt wird.

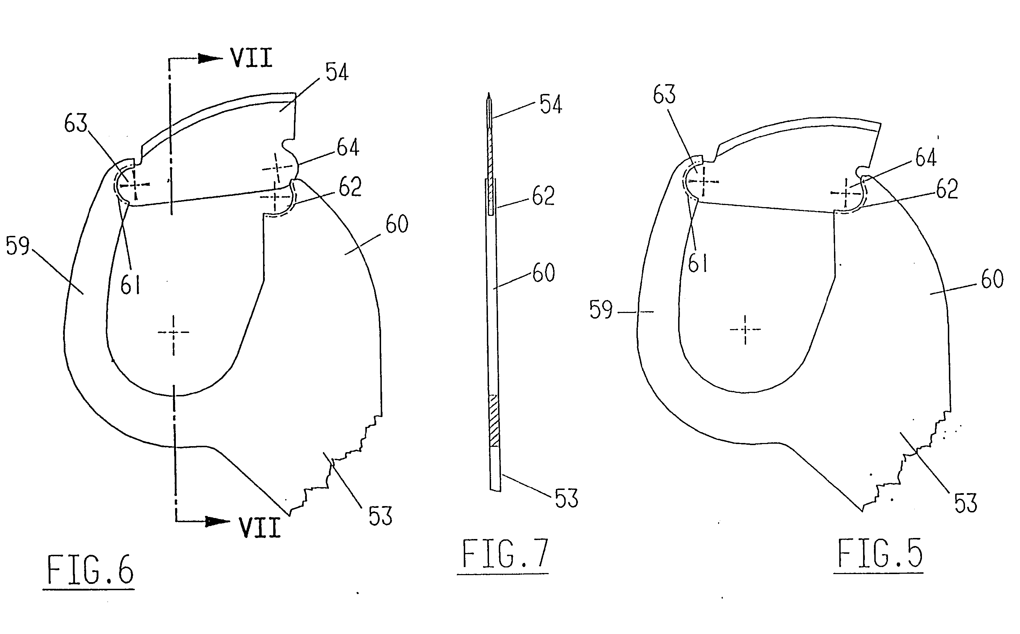

In dem Ausführungsbeispiel nach den Fig. 2 und 3 sind die Werkzeughalter 53 an einem verschwenkbaren und von einer Feder 55 beaufschlagbaren Schaltrohr 56 über eine Klemmverbindung 57 gehaltert. In dem gezeigten Ausführungsbeispiel hat der jeweilige Werkzeughalter den Achskörper 58 des Erntegutförderers 23 umgreifende Halteformansätze 59 und 60. Diese Halteformansätze und der Werkzeughalter können auch derart ausgebildet sein, daß sie den Achskörper 58 übergreifen. Einer der gabelförmigen Halteformansätze ist nachgiebig ausgebildet, um das einfache Ein- und Ausbringen der Schneidwerkzeuge zu ermöglichen. An den Halteenden der Halteformansätze 59 und 60 haben diese Formausnehmungen in Gestalt einer durchgehenden Fräsnut (Fig. 5, Fig. 6, Fig. 7) in die entsprechenden Halterungsansätze 63 und 64 der Schneidwerkzeuge einsetzbar sind und mittels einem Werkzeug auch wieder ohne das Erfordernis sonstiger Befestigungsmittel auszuhebeln sind, wie dies schematisch in Fig. 6 veranschaulicht ist. Die Schneidwerkzeuge 54 sind mithin dort einzuklemmen bzw. einzuspannen. Durch den bogenförmigen Verlauf der Schneidklingen der Werkzeuge wird im Betrieb die Kraft auf die Werkzeughalter derart eingeleitet, daß sie in den in der Zeichnung rechte und mithin auch stärker ausgebildete Halteformansatz 60 eingeleitet wird und direkt auf das Schaltrohr 56 weitergeleitet werden kann.

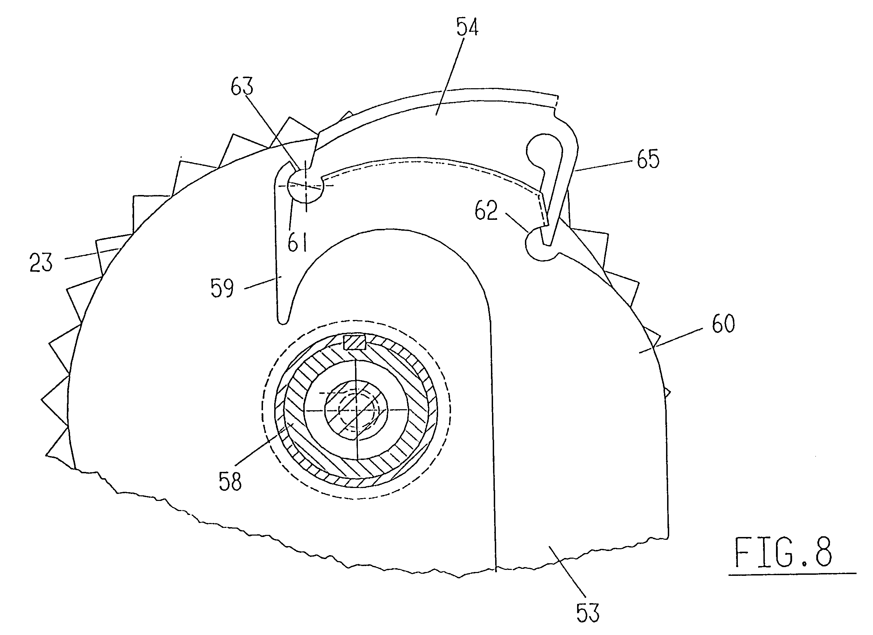

Fig. 8 zeigt ein alternatives Ausführungsbeispiel eines Werkzeughalters 53 und eines Schneidwerkzeuges 54, wobei gleichfalls wiederum der Werkzeughalter 53 Formausnehmungen 61 und 62 hat. Das Schneidwerkzeug weist auch einen Halterungsansatz 63 auf, der an der anderen Seite einen Rastnasenansatz 65 hat, der selbstfedernd ausgebildet ist und den Anschlag der Formausnehmung 62 im montierten Zustand hintergreift. Hier ist auch der Werkzeughalter 53 derart ausgebildet, daß er den Achskörper 58 der Förderwalze übergreift. An das Schaltrohr 56 greift einenends die Feder 55 an (Fig. 2), die anderenends an einem Gehäusewandteil 17,18 abgestützt ist (Fig. 4). Damit sind die Schneidwerkzeuge überlastgesichert und im übrigen in ihre Schneidstellung zu überführen, wenn der an einem Anschlag 66 des Schaltrohres 56 angreifende Schalthubzylinder 67 drucklos geschaltet wird.

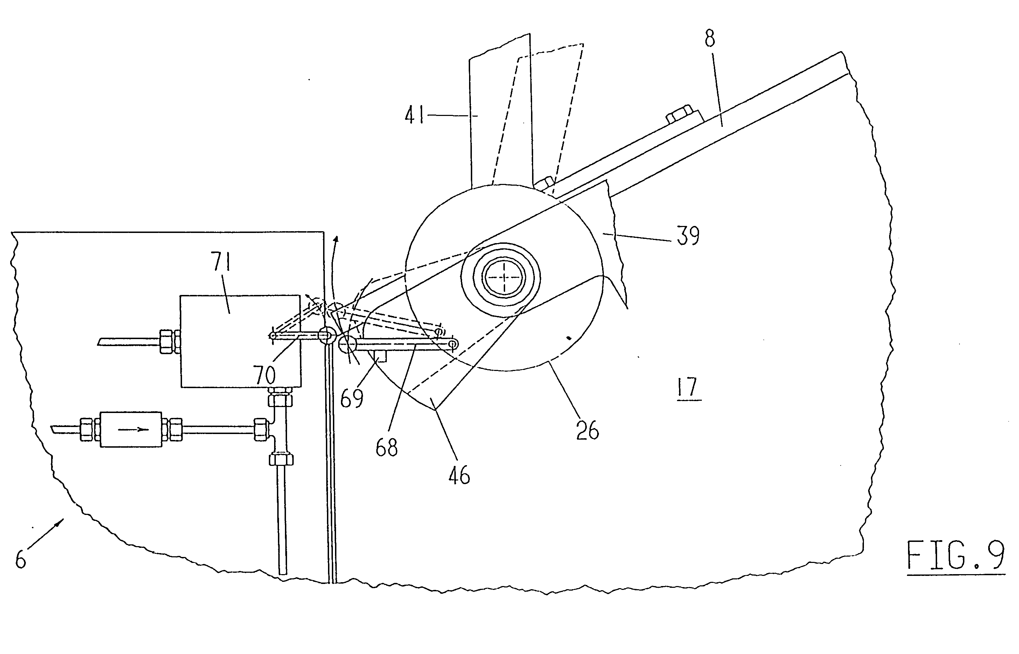

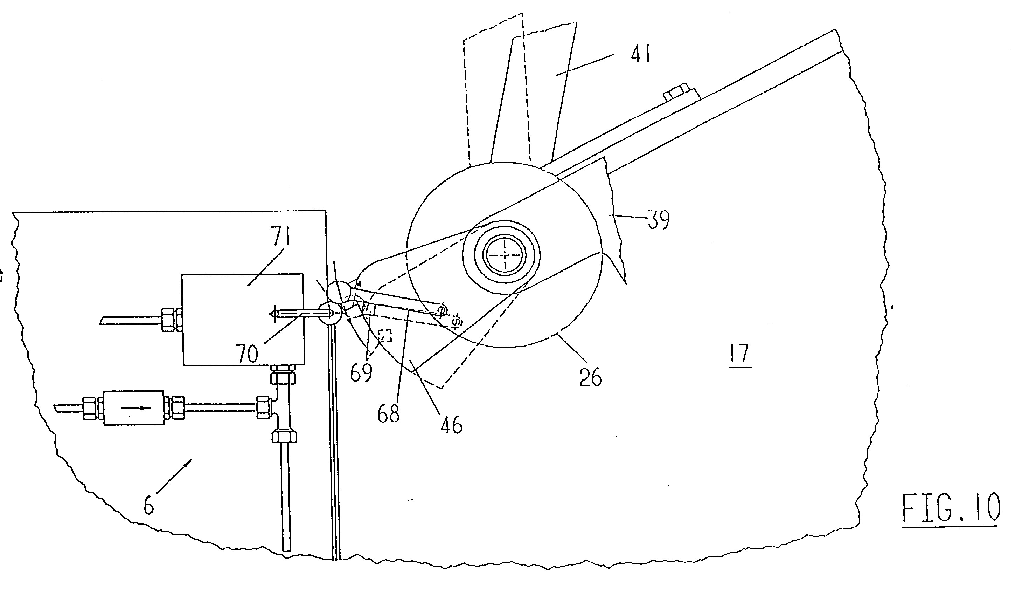

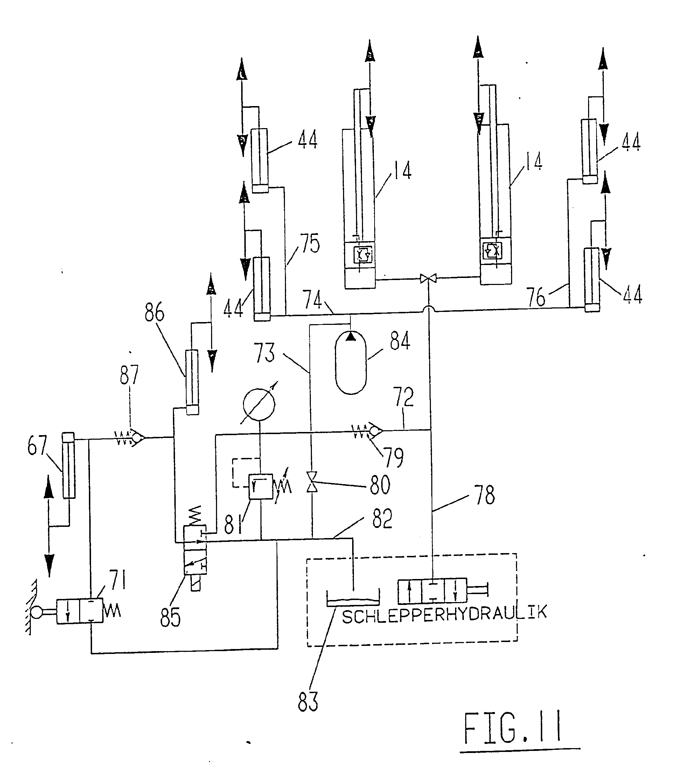

Wie insbesondere den Fig. 9 und 10 zu entnehmen ist, ist an dem Verbindungsarm 46 des Hebels 41 der Spann- und Ausgleichsrolle 42 ein Stellhebel 68 mit einem Widerlager 69 angelenkt. Dieser Stellhebel 68 wirkt auf einen Stellhebel 70 eines hydraulischen Schaltventiles 71. Über dieses Schaltventil 71 ist der Schalthubzylinder 67 mit dem Hydraulikmedium zu beaufschlagen bzw. drucklos zu schalten, wie anhand der Fig. 11 noch näher erläutert wird. Das Schaltventil 71 ist integriert in den Hydraulikkreislauf der Maschine sowie der Schaltvorrichtung der Umhüllungsvorrichtung bzw. Netzwickelvorrichtung 6. Ein erstmaliges Ausrücken der Schneidwerkzeuge erfolgt in der Weise, daß die beispielsweise gerade an einen Schlepper angehängte und mit einem Druckmittelanschluß mit dem Schlepper verbundene Maschine zunächst erst einmal, ohne daß die Ballenförderer der Maschine angetrieben werden, hydraulisch über die Zylinder 14 geöffnet und wieder geschlossen wird. Danach wird von der Bedienperson die Startvorrichtung der Netzwickelvorrichtung betätigt, so daß der Schalthubzylinder 67 mit dem Druckmedium aus einem Druckspeicher beaufschlagt wird. Danach wird die Maschine in Betrieb genommen. Bei Inbetriebnahme der Maschine sind mithin die Schneidwerkzeuge aufgrund des mit dem Druckmittel beaufschlagten Schaltzylinders 67 in ihrer innerhalb des Erntegutförderers 23 gelegenen Schneidausgangslage. Erreicht der Hebel 41 und damit der Verbindungsarm 46 mit zunehmender Größe die im Uhrzeigersinn gelegene Schwenkstellung, die in der Fig. 9 strichliniert dargestellt ist, ist über den Stellhebel 68 der Stellhebel 70 gleichfalls in die entsprechende Stellung (strichliniert) überführt. Dabei stützt sich der Stellhebel 68 auf dem Widerlager 69 ab. Hat der Stellhebel 70 seine Einschaltposition erhalten, wird das Schaltventil 71 aktiviert und der Schalthubzylinder 67 drucklos geschaltet, wonach über die Federn 55 die Messer in ihre Schneidendstellung über das Schaltrohr 56 verschwenkt werden. Mit dem Startvorgang der Umhüllungsvorrichtung werden die Schneidwerkzeuge wieder in ihre Schneidausgangslage überführt.Hydraulisch ist daher die Ausrückvorrichtung für die Umhüllungsvorrichtung hydraulisch derart aufgebaut, wie dies in der DE-Patenanmeldung P 40 12 741.9 im einzelnen dargelegt ist. Die Schalteinrichtung ist hydraulisch mit diesem Hydraulikkreislauf der Umhüllungsvorrichtung gekoppelt, so daß beim Starten der Umhüllungsvorrichtung der Hubzylinder 67 mit dem Hydraulikmedium beaufschlagt wird und die Schneidwerkzeuge wieder in ihre Schneidausgangslage überführt werden.

In Fig. 11 ist näher die Hydraulik der Maschine veranschaulicht, wie sie vom grundsätzlichen Aufbau aber auch in der DE-Patentanmeldung P 40 12 738.9 veranschaulicht ist. Die Hydraulikzylinder sind an die Schlepperhydraulik über eine gemeinsame Druckleitung angeschlossen. Die Spannzylinder 44 der beiden vorgesehenen Bandförderer 15 und 16 sind über Verbindungsleitungen 72,73,74,75 und 76 an die zentrale Druckmittelversorgungsleitung 78 angeschlossen. Die Verbindungsleitung 72 weist dabei ein Rückschlagventil 79 auf. Die Verbindungsleitung 73 ist desweiteren noch mit einem Absperrventil 80 versehen, das im Betrieb geschlossen ist und z. B. in der Parkstellung eine Entleerung des Hydrauliksystems ermöglicht. Gleichfalls ist der Leitung 72 noch ein Druckbegrenzungsventil 81 zugeordnet, mit dem im vorliegenden Fall die Gesamtanlage auf einen einstellbaren maximalen Betriebsdruck einzustellen ist, so daß im Falle einer Betriebsdrucküberschreitung über eine Abströmleitung 82 in einen Tank 83 entleert werden kann. Gleichfalls ist an die Leitung 73 noch ein Zentraldruckspeicher 84 angeschlossen. Im Betrieb sind sowohl die Hubzylinder 14 als auch die Spannzylinder 44 über die zentrale Druckmittelversorgungsleitung 78 mit Druckmittel zu beaufschlagen. Der Betriebsdruck der Hubzylinder 14 ist geringer als der der Spannzylinder 44, so daß über das an die Druckmittelversorgungsleitung 78 angeschlossene Druckbegrenzungsventil 81 der Betriebsdruck der Spannzylinder 44 einstellbar ist. Wird dabei der zulässige Betriebsdruck überschritten, wird dieser über das Druckbegrenzungsventil abgebaut. Für einen Umhüllungsvorgang und vor Auswerfen eines Ballens ist durch das Ventil 85, das elektromagnetisch betätigbar ist, der Betätigungszylinder 86 der Startvorrichtung der Umhüllungsvorrichtung von der Druckmittelversorgung beaufschlagt. An diese Druckmittelversorgung ist auch der Schalthubzylinder 67 der Schalteinrichtung der Schneidvorrichtung der Förderwalze über ein Rückschlagventil 87 angeschlossen, so daß mit Beaufschlagung des Zylinders 86 auch gleichfalls der Zylinder 67 mit Druckmittel versorgt wird. Das Schaltventil 71 ist auch in diesen Kreislauf integriert, so daß nach Betätigung des Schaltventils 71 im Öffnungssinne das Druckmittel des Hubzylinders 67 in den Tank 83 abgeführt werden kann.

## Patentansprüche

1. Maschine zum Aufnehmen und Pressen von landwirtschaftlichem Erntegut wie beispielsweise Heu, Stroh oder Gras zu rollenförmigen Ballen, mit einer mittels eines Fahrgestells (1) verfahrbaraufklappbaren Wickelkammer (7) zur Umgrenzung eines hinsichtlich der zu formenden Ballengröße variablen Ballenformraumes (9), mit zumindest einem lageveränderlich geführten Ballenförderer (15,16) und mit einem einer Erntegutaufnahmevorrichtung (5) in Erntegutförderrichtung nachgeordneten, den Ballen während des Ballenformvorganges beaufschlagenden Erntegutförderer (23) mit Förderwerkzeugen, dadurch gekennzeichnet, daß der Erntegutförderer (23) nebeneinander angeordnete sowie schwenkbewegliche Schneidwerkzeuge (54) aufweist, welche mittels einer Schalteinrichtung (56) in Abhängigkeit der Größe des zu formenden Ballens aus einer Schneidausgangslage innerhalb des Förderwirkbereiches der Förderwerkzeuge des Erntegutförderers (23) in eine Schneidendstellung außerhalb des Förderwirkbereiches der Förderwerkzeuge des Erntegutförderers (23) überführbar sind.

2. Maschine nach Anspruch 1, dadurch gekennzeichnet, daß der Erntegutförderer (23) als Förderwalze mit Förderwalzensegmenten (51) sowie im wesentlichen ringförmigen Aufnahmeräumen (52) für Werkzeughalter (53) der Schneidwerkzeuge (54) ausgebildet ist.

3. Maschine nach Anspruch 2, dadurch gekennzeichnet, daß sich die Schneidklingen der Schneidwerkzeuge (54) in ihren Schneidendstellungen an den Förderwalzenmantel anschließen.

4. Maschine nach einem der Ansprüche 1 bis 3, dadurch gekennzeichnet, daß die Schneidwerkzeuge (54) jeweils eine sich in Förderrichtung des Erntegutförderers (23) und zum zu formenden Ballen hin erweiternde Schneidklinge haben.

5. Maschine nach Anspruch 4, dadurch gekennzeichnet, daß sich die Schneidklinge bogenförmig erweitert.

6. Maschine nach einem der Ansprüche 1 bis 5, dadurch gekennzeichnet, daß die Schneidwerkzeuge (54) an an einem schwenkbaren Schaltrohr der Schalteinrichtung (56) festlegbaren Werkzeughaltern (53) befestigbar sind.

7. Maschine nach einem der Ansprüche 1 bis 6, dadurch gekennzeichnet, daß die Schalteinrichtung (56) hydraulische oder pneumatische Schaltkörper (67,71) umfaßt.

8. Maschine nach einem der Ansprüche 1 bis 7, dadurch gekennzeichnet, daß die Schneidwerkzeuge (54) mit einer Federkraft beaufschlagbar sind.

9. Maschine nach einem der Ansprüche 2 bis 8, dadurch gekennzeichnet, daß die Werkzeughalter (53) Halteformansätze (59,60) haben, die die Drehachse des Erntegutförderers (23) über- oder umgreifen.

10. Maschine nach Anspruch 9, dadurch gekennzeichnet, daß die Halteformansätze (59,60) gabelförmig ausgebildet sind.

11. Maschine nach Anspruch 9, dadurch gekennzeichnet, daß zumindest einer der Gabelzinken der gabelförmigen Halteformansätze (59) nachgiebig ausgebildet ist.

12. Maschine nach einem der Ansprüche 2 bis 11, dadurch gekennzeichnet, daß die Schneidwerkzeuge (54) in Formausnehmungen (61,62) von Werkzeughaltern (53) einsetzbare Halterungsansätze (63,64) haben.

13. Maschine nach Anspruch 12, dadurch gekennzeichnet, daß die Formausnehmungen (61,62) durch eine Fräsnut gebildet sind.

14. Maschine nach Anspruch 12 oder 13, dadurch gekennzeichnet, daß die Schneidwerkzeuge (54) in den Formausnehmungen (61,62) der Werkzeughalter (53) festklemmbar und aushebelbar gehaltert sind.

15. Maschine nach einem der Ansprüche 1 bis 14, dadurch gekennzeichnet, daß die Schneidwerkzeuge (54) einen an dem jeweiligen Werkzeughalter (53) arretierbaren Rastnasenansatz (65) haben.

16. Maschine nach einem der Ansprüche 9 bis 15, dadurch gekennzeichnet, daß die Halteformansätze (59,60) in den den Schneidwerkzeugen zugewandten Stirnendbereichen bogenförmig mit integrierter Fräsnut zur Aufnahme der Schneidwerkzeuge (54) ausgebildet sind.

17. Maschine nach einem der Ansprüche 1 bis 16, dadurch gekennzeichnet, daß die Schneidwerkzeuge (54) in Abhängigkeit der Betriebsstellung eines Spannelementes (37,38,42,50) des lageveränderlich geführten Ballenförderers (15,16) aus ihrer Schneidausgangslage in die Schneidendstellung überführbar sind.

18. Maschine nach Anspruch 17, dadurch gekennzeichnet, daß das Spannelement (37,38,42,50) mit einem Winkelhebel (41,46) verbindbar ist, der einen an einen Widerlager (69) abstützbaren Stellhebel (68) zur Betätigung der Schalteinrichtung aufweist.

19. Maschine nach Anspruch 17 oder 18, dadurch gekennzeichnet, daß über den Stellhebel ein Schaltventil eines auf das Schaltrohr der Schalteinrichtung (56) einwirkenden Hubzylinder (67) betätigbar ist.

20. Maschine nach einem der Ansprüche 1 bis 19, dadurch gekennzeichnet, daß an dem Schaltrohr der Schneidwerkzeuge (54) Federn (55) angreifen.

21. Maschine nach einem der Ansprüche 1 bis 20, mit einer eine hydraulisch aktivierbare Starteinheit umfassenden Vorrichtung zum Umhüllen eines zu formenden Ballens mit einem Abschnitt einer Hüllbahn, dadurch gekennzeichnet, daß das Schaltventil (71) und der Hubzylinder (67) an den Hydraulikkreislauf der Starteinheit anschließbar sind.

## Claims

1. A machine for picking up and compressing agricultural produce such as for example hay, straw or grass to form roll-shaped bales, having, adapted for movement by means of a chassis (1), a reeling chamber (7) hinged to open and intended to bound a bale-shaped space (9) which is variable according to the size of bale to be formed, with at least one variable-position bale conveyor (15, 16) and with, disposed downstream of a produce pick-up means (5), in the direction of produce conveyance, a produce conveyor (23) with conveyor tools and acting upon the bales during the bale-forming process, characterised in that the produce conveyor (23) comprises adjacently disposed and pivotably movable cutting tools (54) which, according to the size of the bale to be formed, can be moved out of a cut-starting position inside the effective conveying area of the conveyor tools of the produce conveyor (23) and into a cut-finishing position outside the effective range of the conveyor tools of the produce conveyor.

2. A machine according to Claim 1, characterised in that the produce conveyor (23) is constructed as a conveyor roller with conveyor roller segments (51) and substantially annular spaces (52) to accommodate holders (53) for the cutting tools (54).

3. A machine according to Claim 2, characterised in that in their cut-finishing positions the cutting blades of the cutting tools (54) are adjacent the shell of the conveyor rollers.

4. A machine according to one of Claims 1 to 3, characterised in that the cutting tools (54) each have a cutting blade which widens out in the direction of conveyance of the produce conveyor (23) and towards the bale which is to be formed.

5. A machine according to Claim 4, characterised in that the cutting blade widens out arcuately.

6. A machine according to one of Claims 1 to 5, characterised in that the cutting tools (54) can be fixed on tool-holders (53) which can be mounted on a pivotable switching tube of the switching means (56).

7. A machine according to one of Claims 1 to 6, characterised in that the switching means (56) comprises hydraulic or pneumatic switching members (67, 71).

8. A machine according to one of Claims 1 to 7, characterised in that the cutting tools (54) can be exposed to a spring force.

9. A machine according to one of Claims 2 to 8, characterised in that the tool-holders (53) have holding and shaping projections (59, 60) which engage over or around the axis of rotation of the produce conveyor (23).

10. A machine according to Claim 9, characterised in that the holding and shaping projections (59, 60) are of bifurcated construction.

11. A machine according to Claim 9, characterised in that at least one of the tines of the bifurcated holding and shaping projections (59) is adapted to yield.

12. A machine according to one of Claims 2 to 11, characterised in that the cutting tools (54) have holding projections (63, 64) which can be inserted into shaping recesses (61, 62) in tool-holders (53).

13. A machine according to Claim 12, characterised in that the shaping recesses (61, 62) are constituted by a milled groove.

14. A machine according to Claim 12 or 13, characterised in that the cutting tools (54) can be supported in the shaping recesses (61, 62) of the tool-holders (53) in such a way that they can be rigidly clamped and lifted out.

15. A machine according to one of Claims 1 to 14, characterised in that the cutting tools (54) have a catch projection (64) which can be locked on the relevant tool-holder (53).

16. A machine according to one of Claims 9 to 15, characterised in that the holding-shaping projections (59, 60) are constructed arcuately in the end portions which face the cutting tools and have an integrated milled groove to hold the cutting tools (54).

17. A machine according to one of Claims 1 to 16, characterised in that as a function of the operating position of a clamping element (37, 38, 42, 50) of the positionally variable bale conveyor (15, 16), the cutting tools (54) can be moved out of their cut-starting position and into the cut-finishing position.

18. A machine according to Claim 17, characterised in that the clamping element (37, 38, 42, 50) can be connected to an angled lever (41, 46) which has a positioning lever (68) which can be braced against an abutment (69) in order to actuate the switching means.

19. A machine according to Claim 17 or 18, characterised in that a switching valve of a lifting cylinder (67) which acts on the switching tube of the switching means (56) can be actuated via the positioning lever.

20. A machine according to one of Claims 1 to 19, characterised in that springs (55) engage the switching tube of the cutting tools (54).

21. A machine according to one of Claims 1 to 20 with, comprising a starting unit which can be activated hydraulically, a device for wrapping a bale which is to be formed in a portion of wrapping strip, characterised in that the switching valve (71) and the lifting cylinder (67) can be connected to the hydraulic circuit of the starting unit.

## Revendications

1. Machine pour ramasser et presser des produits agricoles récoltés comme par exemple du foin, de la paille ou de l'herbe, et former des balles en rouleaux, comprenant un châssis (1) roulant, avec une chambre d'enroulement (7) susceptible de s'ouvrir par basculement pour délimiter une chambre de formation de balle (9) de dimensions variables en fonction de la balle à former, au moins un convoyeur de balle (15, 16) guidé, de longueur variable, et un convoyeur de produit (23) prévu en aval du dispositif de ramassage de produit (5) selon la direction de transfert des produits, et qui sollicite la balle pendant l'opération de formation de balle, et des outils de transfert, machine caractérisée en ce que le convoyeur de produit (23) comporte des outils de coupe (54) pivotants, placés les uns à côté des autres et qu'on peut faire passer, par une installation de commutation (56) et en fonction de la dimension de la balle à former, d'une position de repos à l'intérieur de la zone de transfert des outils de transfert du convoyeur de produit (23), à une position de coupe en dehors de la zone d'action de transfert des outils de transfert du convoyeur de produit.

2. Machine selon la revendication 1, caractérisée en ce que le convoyeur de produit (23) est un cylindre transporteur avec des segments de cylindre transporteur (51) ainsi que des cavités (52) essentiellement annulaires pour les porte-outils (53) des outils de coupe (54).

3. Machine selon la revendication 2, caractérisée en ce que les arêtes des outils de coupe (54) sont adjacentes à l'enveloppe du cylindre de transfert lorsque ces outils occupent leur position de fin de coupe.

4. Machine selon l'une des revendications 1 à 3, caractérisée en ce que les outils de coupe (54) ont des lames de coupe allant en augmentant dans la direction de transfert du convoyeur de produit (23) et en direction de la balle en formation.

5. Machine selon la revendication 4, caractérisée en ce que les arêtes de coupe se déploient en arc.

6. Machine selon l'une des revendications 1 à 5, caractérisée en ce que les outils de coupe (54) sont fixés à des porte-outils (53) fixés à un tube de commutation pivotant de l'installation de commutation (56).

7. Machine selon l'une des revendications 1 à 6, caractérisée en ce que l'installation de commutation (56) comprend des organes de commutation hydrauliques ou pneumatiques (67, 71).

8. Machine selon l'une des revendications 1 à 7, caractérisée en ce que les outils de coupe (54) sont sollicités par une force de ressort.

9. Machine selon l'une des revendications 2 à 8, caractérisée en ce que les porte-outils (53) ont des prolongements de forme pour fixation (59, 60) qui entourent ou passent sur l'axe de rotation du convoyeur de produit (23).

10. Machine selon la revendication 9, caractérisée en ce que les prolongements de forme (59, 60) ont une forme de fourche.

11. Machine selon la revendication 9, caractérisée en ce qu'au moins l'une des dents des prolongements en forme de fourche (59) est souple.

12. Machine selon l'une des revendications 2 à 11, caractérisée en ce que les outils de coupe (54) des cavités de forme (61, 62) ont des prolongements de maintien (63, 64) qui se placent dans les porte-outils (53).

13. Machine selon la revendication 12, caractérisée en ce que les cavités de forme (61, 62) sont constituées par une rainure fraisée.

14. Machine selon la revendication 12 ou 13, caractérisée en ce que les outils de coupe (54) se serrent ou sont fixés de manière à pourvoir être décrochés, dans les cavités de forme (61 62) des porte-outils (53).

15. Machine selon l'une des revendications 1 à 14, caractérisée en ce que les outils de coupe (54) ont un bec d'accrochage (65) qui se fixe dans le porte-outils respectif (53).

16. Machine selon l'une des revendications 9 à 15, caractérisée en ce que les prolongements de forme (59, 60) ont une forme arquée dans les zones frontales tournées vers les outils de coupe, avec une rainure fraisée intégrée pour recevoir les outils de coupe (54).

17. Machine selon l'une des revendications 1 à 16, caractérisée en ce que les outils de coupe (54) peuvent être passés de leur position de repos à leur position de fin de course de coupe selon la position de fonctionnement d'un élément tendeur (37 38, 42, 50) du convoyeur (15, 16) guidé de manière variable en position.

18. Machine selon la revendication 17, caractérisée en ce que l'élément tendeur (37 38, 42, 50) peut être relié à un levier coudé (41, 46) ayant un levier de réglage (68) s'appuyant sur un contre-appui (69) pour actionner l'installation de commutation.

19. Machine selon la revendication 17 ou 18, caractérisée en ce que le levier de réglage de commande et une soupape de commutation d'un levier de levage (67) agissent sur le tube de commutation de l'installation de commutation (56).

20. Machine selon l'une des revendications 1 à 19, caractérisée par des ressorts (55) agissant sur le tube de commutation des outils de coupe (54).

21. Machine selon l'une des revendications 1 à 20, comportant une unité de démarrage actionnée hydrauliquement et ayant un dispositif pour envelopper une balle formée avec un segment de bande, machine caractérisée en ce que la soupape de commutation (71) et le vérin de levage (67) sont susceptible d'être reliés au circuit hydraulique de l'unité de démarrage.
